# EUROPEAN PATENT APPLICATION

(11) **EP 2 671 641 A1**
(43) Date of publication of application: **11.12.2013**
(21) Application number: 13170845.5
(22) Date of filing: 06.06.2013
(51) Int. Cl.: B01J 37/16, B01J 23/42, B01J 23/44, B01J 35/00, B01J 37/02, H01G 9/20

(54) **A method of deposition of Pt or Pd catalysts using gaseous reducing agents**

(30) Priority: 07.06.2012 SI 201200188; 27.05.2013 SI 201300131
(71) Applicant: Univerza V Ljubljani, 1000 Ljubljana (SI)
(72) Inventor: Matoh, Lev, 1000 Ljubljana (SI); Kozjek Kofic, Irena, 1000 Ljubljana (SI); Bukovec, Natasa, 1000 Ljubljana (SI); Bukovec, Peter, 1000 Ljubljana (SI)
(74) Representative: Grünecker, Kinkeldey, Stockmair & Schwanhäusser

(57) **Abstract**

The present invention provides a practical method to easily deposit catalytic platinum or palladium nano-particles or layers at low temperatures. Using gaseous reducing agents it is possible to deposit metallic Pt or Pd on any number of substrates. The present invention solves the problem of depositing catalytic platinum or palladium on flexible thermoplastic substrates, which are not stable at higher temperatures. Platinum or palladium prepared this way can be used as an immobilised catalyst or electro-catalyst in Grätzel cells, fuel cells and for electro-oxidation/reduction of organic compounds. Furthermore the present invention provides a practical method to deposit electrically conductive platinum or palladium layers at low temperatures that exhibit excellent adhesion and low sheet resistance.

## Description

### Field of the invention

The present invention relates to a method of deposition of Pt or Pd nano-particles or layers at low temperatures. In particular, the present invention relates to a novel method of deposition of Pt or Pd by chemically reducing the platinum or palladium precursor complex using gaseous reducing agents.

### Background of the invention

Among promising types of solar cells, dye-sensitized solar cells (DSSCs) are fairly cheap to manufacture and have a good cost to power production ratio [B. O'Regan, M. Grätzel, Nature, 1991, 335, 737-739; M. Gratzel, J. Photochem. Photobiol. C, 2003, 4, 145-153]. An integral part of DSSCs is the counter electrode that catalyses the reduction of tri-iodide to iodide, thus regenerating the electrolyte and completing the circuit that enables the production of electrical energy. The typical electrode is prepared by depositing a thin layer of the catalyst on an optically transparent electrode (OTE), usually an SnO₂:F coated glass plate. From several materials that are able to catalyse this reaction, metallic Pt has proven to be the most effective. Lately much effort has been put into the deposition of thin Pt layers at low temperatures and the development of flexible dye-sensitised solar cells that would overcome the restrictions imposed by the rigidity of the glass OTE used in conventional solar cell designs. The main problem to achieve this is the relatively high required temperature to reduce the deposited Pt precursor to metallic Pt (above 400 °C), which plastic substrates cannot withstand [P. Li, J. Wu, J. Lin, M. Huang, Z. Lan and Q. Li, Electrochim. Acta, 2008, 53, 4161-4166].

There are various methods for the deposition of Pt particles on a number of substrates at low temperatures, but most of them require sophisticated and expensive equipment or are too complicated to be of practical use. It is thus important to develop a simple and effective method of depositing Pt nano-particles at low temperatures. One way of achieving this goal is by reduction with various reducing agents in a solution-based process, but these methods have several disadvantages:
(1) they result in poor adhesion of the Pt particles to the surface,
(2) the resulting layers are non-uniform because of the aggregation of particles in the liquid phase and spotty deposition because of droplet formation of the solution while drying,
(3) the resulting Pt particles have bad adhesion to the surface and can easily be wiped off.

### Summary of the invention

The present invention was made in view of the prior art described above, and the object of this invention is to provide a simple method of reduction of the Pt precursor at low temperatures that would retain or improve the good qualities achieved by reducing the Pt precursor at temperatures above 400 °C. Furthermore, by using the method provided by this invention it is possible to fabricate electro-catalytic Pt particles on transparent electrodes that can be used in electrochemical solar cells. To accomplish this, the present invention provides a method for the chemical reduction of the Pt precursor at low temperatures using gaseous reducing agents. The inventors found that applying a liquid reducing agent directly to the substrate caused the agglomeration of Pt nano-particles, since they re-dissolved in the reducing agent and its high surface tension prevented the formation of a uniform layer when drying. To obtain more uniformly distributed metallic Pt nano-particles, the samples were exposed to the vapour of the reducing agent instead. Because the precursor cannot dissolve in the reductionstep, there is no movement of the Pt particles and the quality of the thin layer is therefore dependent solely on the deposition of the precursor solution and the completeness of the solid-gas reaction. The deposited Pt nano-particles exhibit excellent adhesion and cannot be removed by wiping or cleaning in an ultrasonic bath. Adhesion is the result of the interaction of nano-particles with the surface of the substrate and is related to the surface energy of the particles. Since the surface energy rapidly decreases after particle formation because of the rearrangement of atoms on the surface, adhesion can be improved by suppressing the ageing of the nano-particles before their attachment. This is achieved by forming the nano-particles directly on the surface of the substrate at the gas-solid interface.

The inventors also found that the described invention can be used to deposit electrically conductive Pt layers on flexible substrates. By increasing the amount of deposited Pt above 30 µg cm⁻² the Pt particles form a continuous layer rather than isolated particles, resulting in the ability to conduct electrical current.

Furthermore it is possible to expand the described invention to obtain metallic Pd nano-particles or conductive layers in the same way as with Pt.

### Brief description of the drawings

Figure 1: SEM image of Pt nano-particles on SnO₂:F covered glass deposited using the spin coating method.
Figure 2: SEM image of Pt nano-particles on SnO₂:F covered glass deposited using the spin coating method.
Figure 3: SEM image of Pt nano-particles on SnO₂:F covered glass deposited using the spin coating method.
Figure 4: SEM image of Pt nano-particles on SnO₂:F covered glass deposited using the drop coating method.
Figure 5: SEM image of Pt nano-particles on SnO₂:F covered glass deposited using the drop coating method.
Figure 6: SEM image of Pt nano-particles on SnO₂:F covered glass deposited using the drop coating method.
Figure 7: XPS spectre of the conductive glass and the Pt layer.
Figure 8: XPS spectre of the 4f Pt region.
Figure 9: The first 10 cyclovoltammograms in the iodide electrolyte.
Figure 10: 1000 cycles in 0.1 M HClO₄.
Figure 11: 1000 cycles in the iodide electrolyte.
Figure 12: Cyclic voltammograms of the 100^{th} cycles of samples with different loadings of Pt in 0.1 M HClO₄.
Figure 13: Cyclic voltammograms of the 100^{th} cycles of samples with different loadings of Pt in the iodide electrolyte.
Figure 14: I-V graph of the assembled Grätzel cell.
Figure 15: XPS spectra of the samples with reduced Pd.

### Detailed description of the invention

Hereinafter, the best mode for carrying out the present invention is described in detail.

The method for depositing Pt nano-particles described in this invention consists of several steps:
a) The preparation of the precursor solution.
   The precursor is typically a soluble Pt complex, usually hexachloroplatinum(IV) acid (H₂PtCl₆) or its salts.
   The solvent can be any known solvent that dissolves the precursor complex and is typically water or an organic solvent or a mixture of water and an organic solvent. Preferably it is a mixture of water and an alcohol, where the alcohol is preferably ethanol and the ratio between the water and alcohol is preferably greater than 1, preferably 97 % ethanol.
b) The deposition of the precursor complex solution on the substrate.
   The substrates are any known materials that are stable up to 100 °C and chemically resistant to the precursor complex, the solvent and the reducing agent, preferably the substrates are: glass, polymers, ceramics, carbon, semiconductors or metal oxides.
c) Drying of the layer from step b).
d) The reduction of the dry precursor complex from step b) to metallic Pt by using a gaseous reducing agent.
   The reducing agents in view of the invention are those reducing agents that are in gaseous form below 170 °C and can reduce the precursor complex in their gaseous form. Preferentially the reducing agents are formic acid, ethylene glycol, methanal, ethanal, propanal or propanediol.

### Step a)

The first step is the preparation of the Pt precursor complex solution. This is achieved by dissolving the precursor complex (usually H₂PtCl₆) in an appropriate solvent. Typically an organic solvent with a low surface tension such as ethanol is used to obtain a uniform precursor layer. The important factors to obtain a uniform precursor layer are the surface tension of the solvent and the hydrophilic/hydrophobic nature of the substrate. The typical concentrations range from 10⁻⁶ M to a saturated solution, preferably 0.02 M.

### Step b)

Pt precursor complex solution from step a) is deposited on the substrate using one of the following methods:
1) Deposition through the adsorption of the precursor complex on the surface of the substrate by submerging the substrate in the precursor solution. After 30 minutes the substrate is removed from the solution and thoroughly rinsed with the solvent.
2) Using the dip coating technique. The substrate is immersed in the solution of the precursor complex at a constant speed. The substrate is then withdrawn from the solution at a constant speed to avoid any jitters. The thickness of the deposited layer is dependent upon the speed of the withdrawal with a faster speed producing thicker layers.
   It is possible to add organic molecules to the precursor solution that polymerize and increase the viscosity of the solution, e.g. citric acid in EtOH.
3) Using the spin coating technique. An appropriate amount of the precursor solution is dropped on a spinning substrate. The amount of deposited Pt and the thickness of the layer are dependent upon the concentration of the precursor solution and the speed of rotation.
4) Using the spray coating technique. An appropriate amount of the solution from step a) is sprayed on the substrate. The temperature of the substrate is in the range of 0 - 170 °C and is dependent upon the solvent and substrate used.
5) Using the drop coating technique. An appropriate amount of the solution from step a) is dropped on the substrate. The temperature of the substrate is in the range of 0 - 170 °C and is dependent upon the solvent and substrate used.

### Step c)

After the deposition the samples are dried in air.

### Step d)

The dried layer from step b) is exposed to the vapour of the reducing agent, typically formic acid or ethylene glycol, at temperatures between 100 °C and 170 °C, preferably 150 °C for 15 minutes. This is most easily achieved by placing the substrate in a semi-sealed container together with a small amount of the reducing agent. The reducing agent can be in liquid form at the start but has to evaporate when the container is heated to the desired temperature. It is also advisable to allow the reducing agent vapours to slowly escape to prevent condensation of the reducing agent on the surface of the samples. The presence of air does not affect the reaction. After the reduction the prepared layers are cooled in air.

The cycle of deposition and reduction can be repeated indefinitely and the Pt loading increased with each cycle. It is possible to combine different deposition techniques. The maximum possible amount of Pt deposited in one cycle is dependent upon the technique used (1 - lowest, 5 - highest). The technique also affects the size of the agglomerates and the uniformity of the layer.

To obtain conductive Pt layers the amount of deposited Pt has to be increased, which subsequently increases the thickness of the layer and causes greater agglomeration of particles during the deposition of the precursor solution. To achieve the required uniformity and adhesion of the deposited layers a thin transparent hydrophilic layer, such as TiO₂ or ZnO, has first to be deposited. This layer serves two functions. The first is due to its hydrophilic nature which is further increased by drying the samples under UV light [R.Sun, A. Nakajima, A. Fujishima, T. Watanabe and K. Hashimoto, J. Phys. Chem. B, 2001, 105, 1984-1990]. This prevents droplet formation of the precursor solution while drying and enables uniform deposition of the precursor complex. Its second function is to act as a binder between the Pt layer and the desired substrate, which allows thicker layers to retain good adhesion.

Conductive Pt layers are thus prepared by drop coating an appropriate amount of the precursor solution on a TiO₂ coated substrate and drying under an UV light. The dry precursor layer is then exposed to the vapour of the reducing agent at temperatures above 100 °C.

It is possible to prepare conductive layer without the TiO₂ layer if the substrate is not hydrophobic but the resulting adhesion is usually not as good.

Pd nano-particles or conductive layers are prepared using the same steps as Pt by replacing the Pt precursor complex with one that contains Pd. The precursor complex is usually H₂PdCl₄ or its salts.

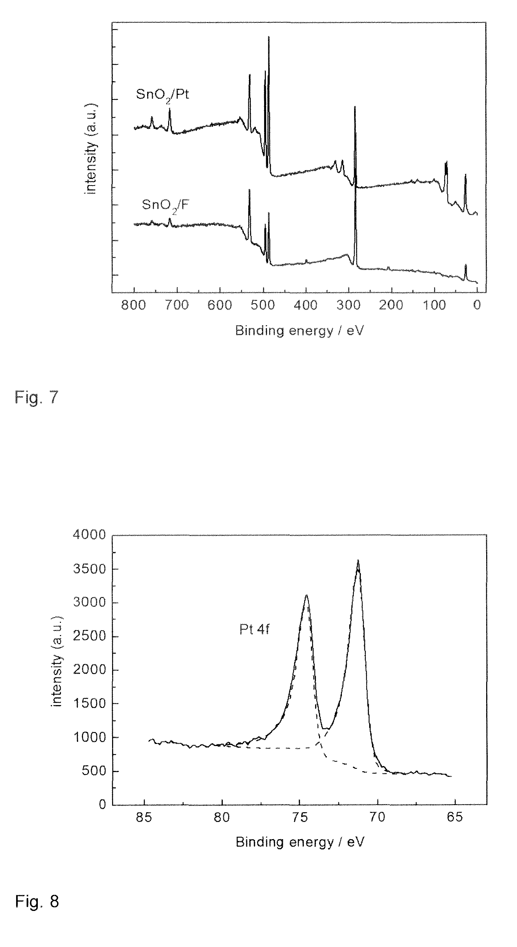

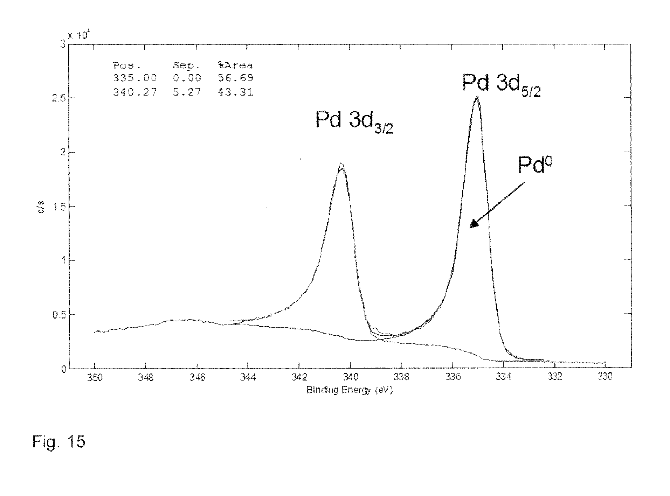

XPS was used to confirm that 100 % of the deposited Pt (Fig. 8) and Pd (Fig. 15) was in a metallic state.

### Analytical methods

### Scanning electron microscopy (SEM)

Scanning electron microscopy (SEM) with a Zeiss ULTRA Plus was used to determine the surface morphology and dispersion of platinum particles on the substrates.

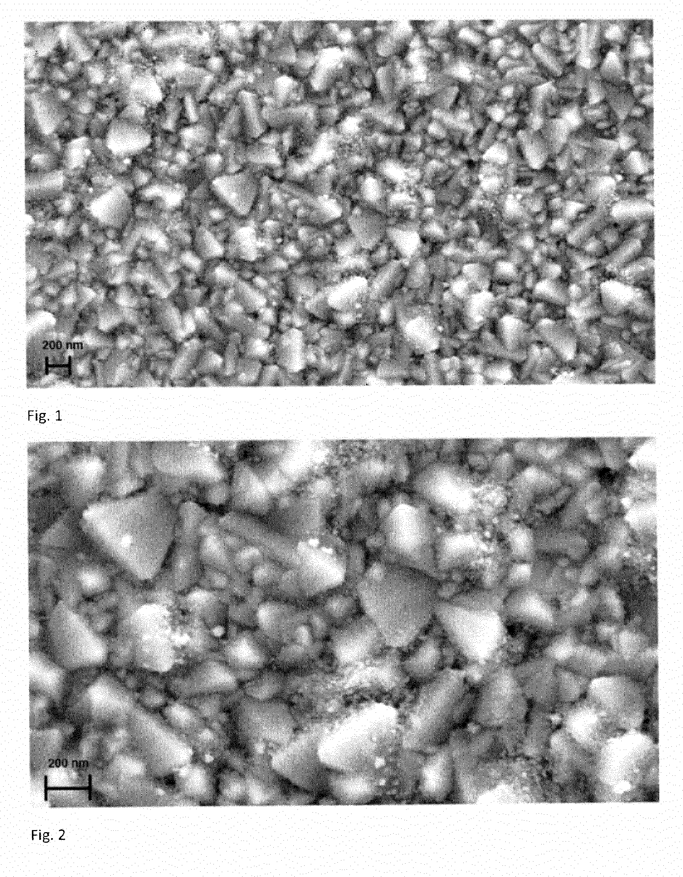

Figures 1 through 3 show SEM images of the surface of a SnO₂:F coated glass covered with Pt nano-particles deposited using the spin coating method. Clearly visible are the randomly sited crystals of SnO₂ which form the rough morphology of the surface. Pt particles cover most of the surface with some agglomeration of Pt particles occurring in the recesses and around the bigger crystals of SnO₂; this is the result of using a spin coater for the deposition.

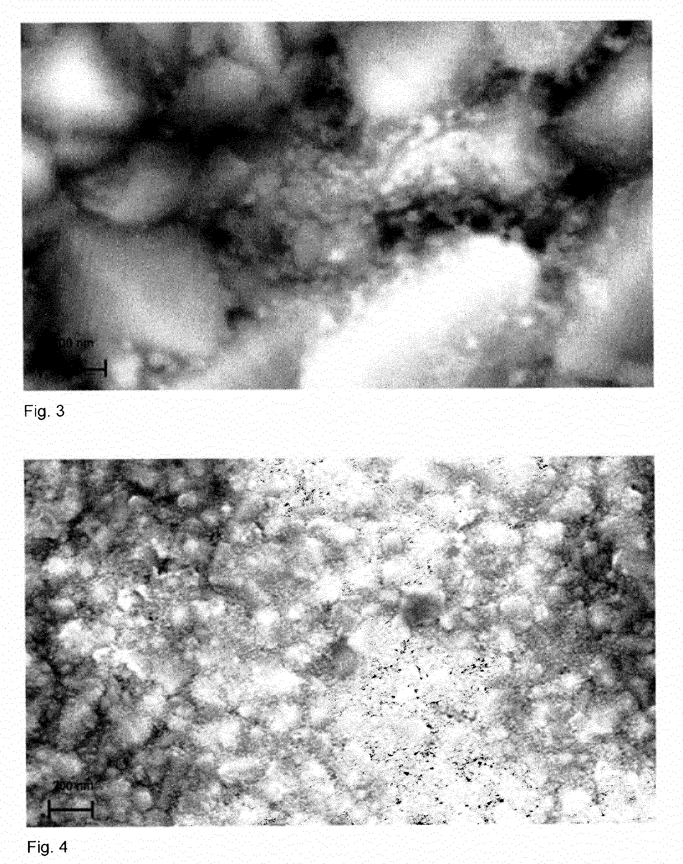

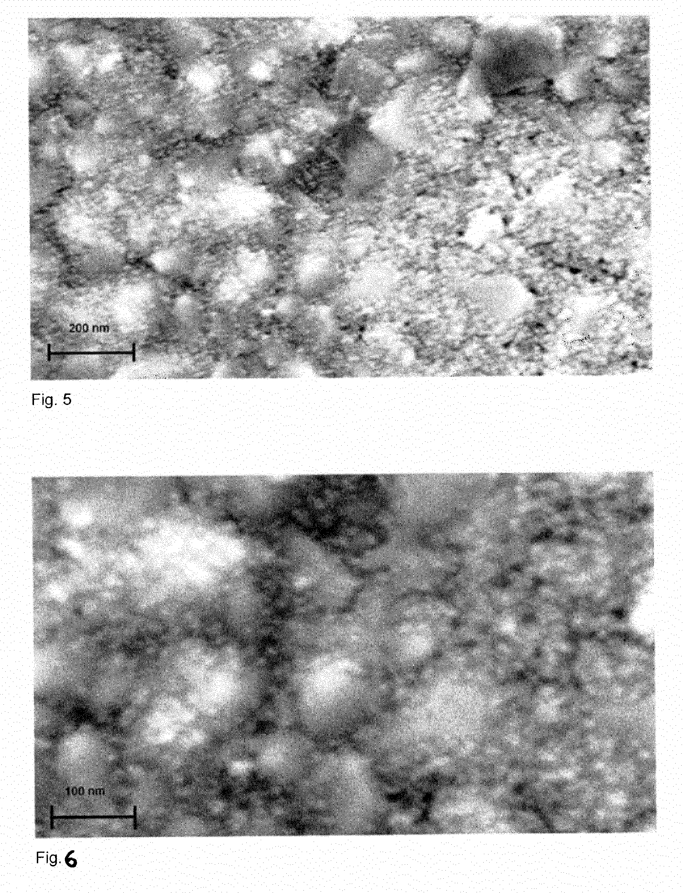

Figures 4 through 6 show SEM images of the surface of a SnO₂:F coated glass covered with Pt nano-particles deposited using the drop coating method. Due to a greater control over the amount of deposited Pt, the loading can be exactly defined and is in this case 15.6 µg/cm². Pt can be seen on the images as white particles that cover most of the bigger SnO² crystals.

Analysis by X-ray photoelectron spectroscopy (XPS or ESCA) was carried out on a PHI-TFA XPS spectrometer produced by Physical Electronics Inc. The area analysed was 0.4 mm in diameter and the depth analysed was about 1-3 nm. Sample surfaces were excited by X-ray radiation from an Al source with photon energy of 1430.6 eV. The wide-scan survey spectra were acquired with analyser pass energy of 187 eV. The narrow-scan spectra of Pt 4f, C 1s, O 1s, Sn 3d, Cl 2p were obtained with an analyser pass energy of 58 eV, yielding an energy resolution of about 1.0 eV. Quantification of the surface composition was performed from XPS peak intensities taking into account relative sensitivity factors provided by the instrument manufacturer.

Cyclic voltammetry (CV) was used to determine the catalytic properties of platinum nano-particles in an iodide electrolyte. The iodide electrolyte consisted of 0.5 M lithium perchlorate, 50 mM lithium iodide and 10 mM iodine in propylene carbonate (PC)9. The experiment was carried out on an EG&G PAR273 computer-controlled potentiostat-galvanostat consisting of a three-electrode cell. The working electrode was platinum deposited on SnO₂:F on glass using the drop coating method with approximately 1.0 cm² of the platinum covered surface exposed to the electrolyte solution. Platinum electrodes were used as the counter and reference electrode. CV was performed from +1.0 to -0.6 V with a scanning rate of 5 mV/s. The environment for all measurements was an air atmosphere in an air-conditioned room at a temperature of 22 ± 2 °C.

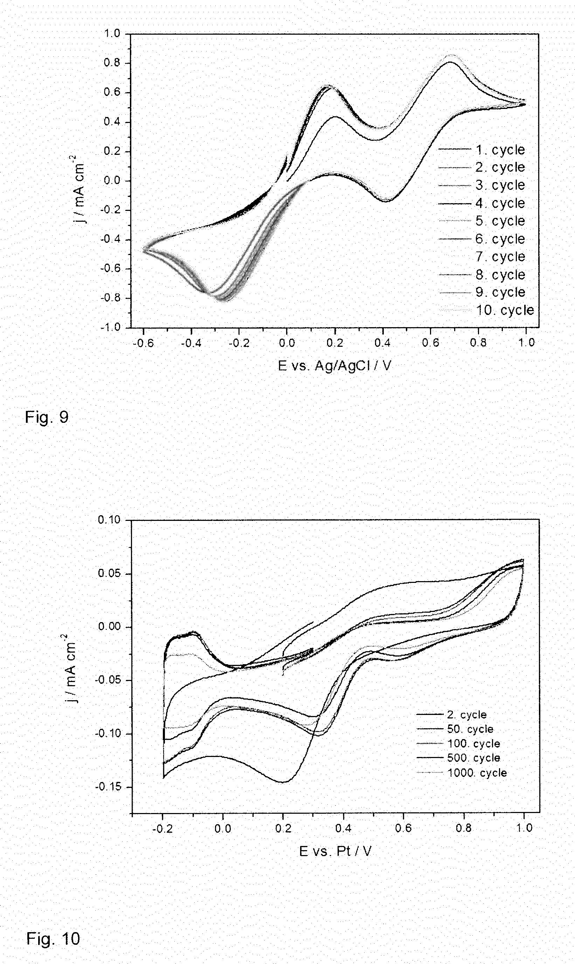

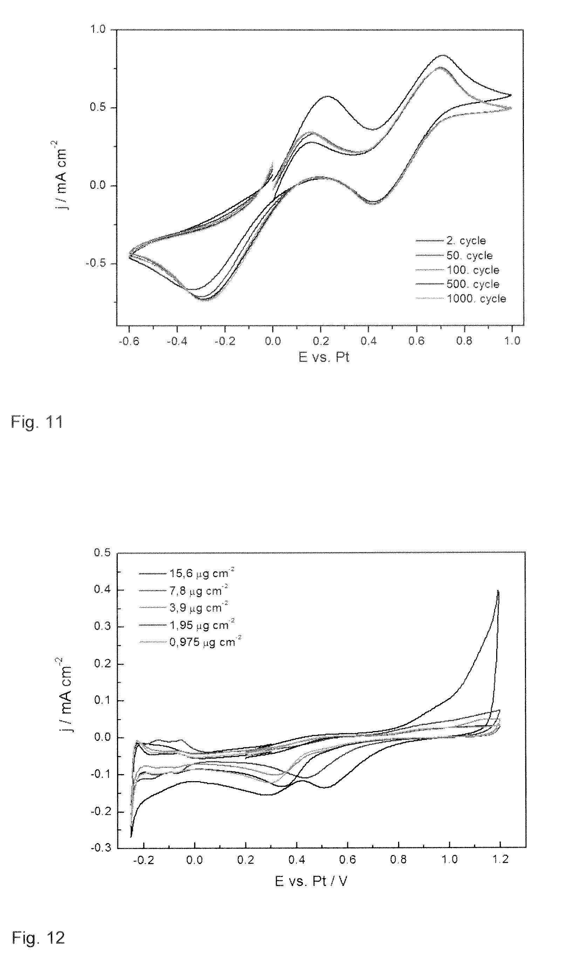

Figure 9 shows the first 10 cycles of the Pt sample in the iodide electrolyte. It can be seen that the catalyst stabilizes relatively quickly and remains stable even after prolonged use (Figures 10 and 11).

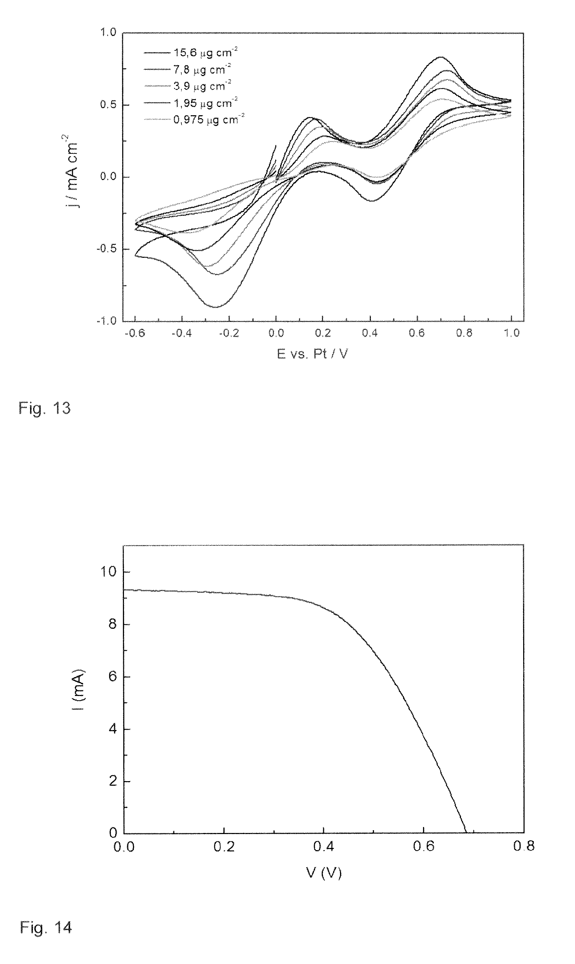

Figures 12 and 13 show cyclic voltammograms of samples with different loadings of Pt in an acid and iodide electrolyte, respectively. It can be seen that the catalytic activity of the prepared samples increases with an increased amount of deposited Pt.

Electrochemical solar cells were assembled using commercially available materials purchased from Solaronix. The working electrode was prepared by applying TiO₂ paste on 0.2 cm² of the 2.5 x 2.5 cm OTE using the doctor blade tehnique, heat treated at 450 °C and then submerged in the dye solution (Ruthenizer 535-bis-TBS, Solaronix 20 mg/50 mL in ethanol). After ten hours, the layer was rinsed and dried at room temperature. The counter electrode was prepared by spin coating an ethanolic solution of H₂PtCl₆ on a 2.5 x 2.5 cm slide of SnO₂:F on glass and chemically reduced using formic acid vapour at 100 °C. After assembly, the cells were covered by a mask with an area of 1.0 cm² to prevent incident light from affecting the measurements. The experiment was carried out on Oriel® Sol3A™ Class AAA Solar Simulator.

The main characteristics of the tested DSSC are found in the table:

| V_{OC} (V) | J_{SC} (mA/cm²) | Fill Factor | Efficiency (%) |
|---|---|---|---|
| 0,682752 | 0,009261 | 55,6489 | 3,7198 |

| Pₘₐₓ (mW) | Iₘₐₓ (A) | Vₘₐₓ (V) |
|---|---|---|
| 3,518619 | 0,00783 | 0,449352 |

Figure 14 shows the I-V graph of the tested DSSC.

### Examples

Hereinafter, the present invention is described in more detail and specifically with reference to the Examples, which however are not intended to limit the present invention.

### Example 1:

A glass plate is immersed in a solution of H₂PtCl₆ in ethanol. After 10 minutes it was withdrawn and rinsed with ethanol. After 15 minutes of drying in air at room temperature the sample was exposed to the vapour of formic acid at 100 °C for 15 minutes.

### Example 2:

A glass plate is immersed in a 0.02 M solution of H₂PtCl₆ in ethanol and withdrawn with a constant speed of 10 cm/min. After 15 minutes of drying in air at room temperature the sample was exposed to the vapour of formic acid at 100 °C for 15 minutes.

### Example 3:

0.02 M solution of H₂PtCl₆ in ethanol is dropped on a spinning glass plate. The speed of rotation of the substrate is 2000 RPM. The volume of the solution is greater than 16 µL/cm². After drying the sample was exposed to the vapour of formic acid at 100 °C for 15 minutes.

### Example 4:

An appropriate amount of 0.02 M solution of H₂PtCl₆ in ethanol is sprayed on a glass plate so that the final amount of deposited solution is approximately 4 µL/cm². After 15 minutes of drying in air at room temperature the sample was exposed to the vapour of formic acid at 100 °C for 15 minutes.

### Example 5:

0.02 M solution of H₂PtCl₆ in ethanol is dropped on a glass plate so that the final amount of deposited solution is approximately 4 µL/cm². After 15 minutes of drying in air at room temperature the sample was exposed to the vapour of formic acid at 100 °C for 15 minutes.

### Example 6:

A polymer foil is immersed in a solution of H₂PtCl₆ in ethanol. After 10 minutes it was withdrawn and rinsed with ethanol. After 15 minutes of drying in air at room temperature the sample was exposed to the vapour of formic acid at 100 °C for 15 minutes.

### Example 7:

A polymer foil is immersed in a 0.02 M solution of H₂PtCl₆ in ethanol and withdrawn with a constant speed of 10 cm/min. After 15 minutes of drying in air at room temperature the sample was exposed to the vapour of formic acid at 100 °C for 15 minutes.

### Example 8:

0.02 M solution of H₂PtCl₆ in ethanol is dropped on a spinning polymer foil. The speed of rotation of the substrate is 2000 RPM. The volume of the solution is greater than 16 µL/cm². After drying the sample was exposed to the vapour of formic acid at 100 °C for 15 minutes.

### Example 9:

An appropriate amount of 0.02 M solution of H₂PtCl₆ in ethanol is sprayed on a polymer foil so that the final amount of deposited solution is approximately 4 µL/cm². After 15 minutes of drying in air at room temperature the sample was exposed to the vapour of formic acid at 100 °C for 15 minutes.

### Example 10:

0.02 M solution of H₂PtCl₆ in ethanol is dropped on a polymer foil so that the final amount of deposited solution is approximately 4 µL/cm². After 15 minutes of drying in air at room temperature the sample was exposed to the vapour of formic acid at 100 °C for 15 minutes.

### Example 11:

A polymer foil with a conductive coating is immersed in a solution of H₂PtCl₆ in ethanol. After 10 minutes it was withdrawn and rinsed with ethanol. After 15 minutes of drying in air at room temperature the sample was exposed to the vapour of formic acid at 100 °C for 15 minutes.

### Example 12:

A polymer foil with a conductive coating is immersed in a 0.02 M solution of H₂PtCl₆ in ethanol and withdrawn with a constant speed of 10 cm/min. After 15 minutes of drying in air at room temperature the sample was exposed to the vapour of formic acid at 100 °C for 15 minutes.

### Example 13:

0.02 M solution of H₂PtCl₆ in ethanol is dropped on a spinning polymer foil with a conductive coating. The speed of rotation of the substrate is 2000 RPM. The volume of the solution is greater than 16 µL/cm². After drying the sample was exposed to the vapour of formic acid at 100 °C for 15 minutes.

### Example 14:

An appropriate amount of 0.02 M solution of H₂PtCl₆ in ethanol is sprayed on a polymer foil with a conductive coating so that the final amount of deposited solution is approximately 4 µL/cm². After 15 minutes of drying in air at room temperature the sample was exposed to the vapour of formic acid at 100 °C for 15 minutes.

### Example 15:

0.02 M solution of H₂PtCl₆ in ethanol is dropped on a polymer foil with a conductive coating so that the final amount of deposited solution is approximately 4 µL/cm². After 15 minutes of drying in air at room temperature the sample was exposed to the vapour of formic acid at 100 °C for 15 minutes.

### Example 16:

A glass plate with a conductive coating is immersed in a solution of H₂PtCl₆ in ethanol. After 10 minutes it was withdrawn and rinsed with ethanol. After 15 minutes of drying in air at room temperature the sample was exposed to the vapour of formic acid at 100 °C for 15 minutes.

### Example 17:

A glass plate with a conductive coating is immersed in a 0.02 M solution of H₂PtCl₆ in ethanol and withdrawn with a constant speed of 10 cm/min. After 15 minutes of drying in air at room temperature the sample was exposed to the vapour of formic acid at 100 °C for 15 minutes.

### Example 18:

0.02 M solution of H₂PtCl₆ in ethanol is dropped on a spinning glass plate with a conductive coating. The speed of rotation of the substrate is 2000 RPM. The volume of the solution is greater than 16 µL/cm². After drying the sample was exposed to the vapour of formic acid at 100 °C for 15 minutes.

### Example 19:

An appropriate amount of 0.02 M solution of H₂PtCl₆ in ethanol is sprayed on a glass plate with a conductive coating so that the final amount of deposited solution is approximately 4 µL/cm². After 15 minutes of drying in air at room temperature the sample was exposed to the vapour of formic acid at 100 °C for 15 minutes.

### Example 20:

0.02 M solution of H₂PtCl₆ in ethanol is dropped on a glass plate with a conductive coating so that the final amount of deposited solution is approximately 4 µL/cm². After 15 minutes of drying in air at room temperature the sample was exposed to the vapour of formic acid at 130 °C for 15 minutes.

### Example 21:

A glass plate is immersed in a solution H₂PtCl₆ in ethanol. After 10 minutes it was withdrawn and rinsed with ethanol. After 15 minutes of drying in air at room temperature the sample was exposed to the vapour of ethylene glycol at 130 °C for 15 minutes.

### Example 22:

A glass plate is immersed in a 0.02 M solution of H₂PtCl₆ in ethanol and withdrawn with a constant speed of 10 cm/min. After 15 minutes of drying in air at room temperature the sample was exposed to the vapour of ethylene glycol at 130 °C for 15 minutes.

### Example 23:

0.02 M solution of H₂PtCl₆ in ethanol is dropped on a spinning glass plate. The speed of rotation of the substrate is 2000 RPM. The volume of the solution is greater than 16 µL/cm². After drying the sample was exposed to the vapour of ethylene glycol at 130 °C for 15 minutes.

### Example 24:

An appropriate amount of 0.02 M solution of H₂PtCl₆ in ethanol is sprayed on a glass plate so that the final amount of deposited solution is approximately 4 µL/cm². After 15 minutes of drying in air at room temperature the sample was exposed to the vapour of ethylene glycol at 130 °C for 15 minutes.

### Example 25:

0.02 M solution of H₂PtCl₆ in ethanol is dropped on a glass plate so that the final amount of deposited solution is approximately 4 µL/cm². After 15 minutes of drying in air at room temperature the sample was exposed to the vapour of ethylene glycol at 130 °C for 15 minutes.

### Example 26:

A polymer foil is immersed in a solution of H₂PtCl₆ in ethanol. After 10 minutes it was withdrawn and rinsed with ethanol. After 15 minutes of drying in air at room temperature the sample was exposed to the vapour of ethylene glycol at 130 °C for 15 minutes.

### Example 27:

A polymer foil is immersed in a 0.02 M solution of H₂PtCl₆ in ethanol and withdrawn with a constant speed of 10 cm/min. After 15 minutes of drying in air at room temperature the sample was exposed to the vapour of ethylene glycol at 130 °C for 15 minutes.

### Example 28:

0.02 M solution of H₂PtCl₆ in ethanol is dropped on a spinning polymer foil. The speed of rotation of the substrate is 2000 RPM. The volume of the solution is greater than 16 µL/cm². After drying the sample was exposed to the vapour of ethylene glycol at 130 °C for 15 minutes.

### Example 29:

An appropriate amount of 0.02 M solution of H₂PtCl₆ in ethanol is sprayed on a polymer foil so that the final amount of deposited solution is approximately 4 µL/cm². After 15 minutes of drying in air at room temperature the sample was exposed to the vapour of ethylene glycol at 130 °C for 15 minutes.

### Example 30:

0.02 M solution of H₂PtCl₆ in ethanol is dropped on a polymer foil so that the final amount of deposited solution is approximately 4 µL/cm². After 15 minutes of drying in air at room temperature the sample was exposed to the vapour of ethylene glycol at 130 °C for 15 minutes.

### Example 31:

A polymer foil with a conductive coating is immersed in a solution of H₂PtCl₆ in ethanol. After 10 minutes it was withdrawn and rinsed with ethanol. After 15 minutes of drying in air at room temperature the sample was exposed to the vapour of ethylene glycol at 130 °C for 15 minutes.

### Example 32:

A polymer foil with a conductive coating is immersed in a 0.02 M solution of H₂PtCl₆ in ethanol and withdrawn with a constant speed of 10 cm/min. After 15 minutes of drying in air at room temperature the sample was exposed to the vapour of ethylene glycol at 130 °C for 15 minutes.

### Example 33:

0.02 M solution of H₂PtCl₆ in ethanol is dropped on a spinning polymer foil with a conductive coating. The speed of rotation of the substrate is 2000 RPM. The volume of the solution is greater than 16 µL/cm². After drying the sample was exposed to the vapour of ethylene glycol at 130 °C for 15 minutes.

### Example 34:

An appropriate amount of 0.02 M solution of H₂PtCl₆ in ethanol is sprayed on a polymer foil with a conductive coating so that the final amount of deposited solution is approximately 4 µL/cm². After 15 minutes of drying in air at room temperature the sample was exposed to the vapour of ethylene glycol at 130 °C for 15 minutes.

### Example 35:

0.02 M solution of H₂PtCl₆ in ethanol is dropped on a polymer foil with a conductive coating so that the final amount of deposited solution is approximately 4 µL/cm². After 15 minutes of drying in air at room temperature the sample was exposed to the vapour of ethylene glycol at 130 °C for 15 minutes.

### Example 36:

A glass plate with a conductive coating is immersed in a solution of H₂PtCl₆ in ethanol. After 10 minutes it was withdrawn and rinsed with ethanol. After 15 minutes of drying in air at room temperature the sample was exposed to the vapour of ethylene glycol at 130 °C for 15 minutes.

### Example 37:

A glass plate with a conductive coating is immersed in a 0.02 M solution of H₂PtCl₆ in ethanol and withdrawn with a constant speed of 10 cm/min. After 15 minutes of drying in air at room temperature the sample was exposed to the vapour of ethylene glycol at 130 °C for 15 minutes.

### Example 38:

0.02 M solution of H₂PtCl₆ in ethanol is dropped on a spinning glass plate with a conductive coating. The speed of rotation of the substrate is 2000 RPM. The volume of the solution is greater than 16 µL/cm². After drying the sample was exposed to the vapour of ethylene glycol at 130 °C for 15 minutes.

### Example 39:

An appropriate amount of 0.02 M solution of H₂PtCl₆ in ethanol is sprayed on a glass plate with a conductive coating so that the final amount of deposited solution is approximately 4 µL/cm². After 15 minutes of drying in air at room temperature the sample was exposed to the vapour of ethylene glycol at 130 °C for 15 minutes.

### Example 40:

0.02 M solution of H₂PtCl₆ in ethanol is dropped on a glass plate with a conductive coating so that the final amount of deposited solution is approximately 4 µL/cm². After 15 minutes of drying in air at room temperature the sample was exposed to the vapour of ethylene glycol at 130 °C for 15 minutes.

### Example 41: Deposition of electrically conductive Pt layers

The substrate is first coated with a thin compact layer of TiO₂. The Pt precursor complex is then deposited on the substrate using the drop coating deposition technique. This is achieved by dropping app. 20 µL cm⁻² of a 0.01 M solution of H₂PtCl₆ on the surface of the substrate and dried in air under an UV light. After drying the precursor complex is chemically reduced by exposing the substrate to formic acid vapour at 100 °C for 15 minutes.

## Claims

1. A method ofdeposition of Pt or Pd nano-particles or layers which includes the deposition of the precursor complex solution on a substrate and chemical reduction of the precursor complex whereby the gaseous form of a reducing agent is used for the chemical reduction of the precursor complex.

2. A method according to claim 1 where the precursor complex is a soluble Pt complex, preferably H₂PtCl₆ or a soluble Pd complex, preferably H₂PdCl₄

3. A method according to claim 1 where the solvent for the preparation of the precursor complex solution is water or an organic solvent or a mixture of water and an organic solvent.

4. A method according to claim 1 where the reducing agent is formic acid, ethylene glycol, methanal, ethanal, propanal or propanediol.

5. A method according to claim 1 whereby the chemical reduction is carried out at temperatures between 100 °C and 170 °C, preferably 150 °C for 15 minutes.

6. A method according to claim 1 where the substrate is any known material stable below 170°C and chemically resistant to the precursor complex" solvent and reducing agent, preferably glass, polymers, ceramics, carbon, semiconductors or metal oxides.

7. A method according to claim 1 where the methods for deposition of the precursor solution are adsorption, dip coating, spray coating, spin coating or drop coating.

8. A counter electrode for Grätzel cells prepared according to claims 1 to 7.

9. Platinum or palladium electro-catalyst prepared according to claims 1 to 7.

10. An immobilised platinum or palladium catalyst prepared according to claims 1 to 7.

11. An electrically conductive platinum or palladium layer prepared according to claims 1 to 7 whereby a thin transparent hydrophilic layer is deposited to a substrate prior the deposition of the precursor complex solution.
